# EUROPEAN PATENT APPLICATION

(11) **EP 1 740 021 A2**
(43) Date of publication of application: **03.01.2007**
(21) Application number: 06253184.3
(22) Date of filing: 20.06.2006
(51) Int. Cl.: H05B 37/03, H05B 41/292

(54) **A lamp end of life indicator**

(30) Priority: 01.07.2005 GB 0513486
(71) Applicant: Tyco Electronics UK Ltd., Dorcan Swindon SN3 5HH (GB)
(72) Inventor: Dudley, Neil, Chelmford CM1 7SN (GB)
(74) Representative: Powell, Timothy John

(57) **Abstract**

An apparatus for detecting a fault in a high intensity discharge (HID) lamp having an operating voltage, the apparatus comprising:
a drive signal source for providing a drive signal to the lamp, the drive signal having a drive parameter; and
a controller for controlling operation of the lamp, the controller comprising a delay component for delaying activation of the drive signal source in response to the operating voltage of the lamp.

## Description

This invention relates to apparatus for signalling impending end of life in a high intensity discharge (HID) lamp and particularly, but not exclusively, to a device for signalling impending end of life in an HID lamp forming part of a lighting system. The invention relates particularly, but not exclusively, to a device for providing early warning of an impending fault in an HID lamp forming part of a public lighting system.

Public lighting systems are generally provided by a lighting service provider. In such a public lighting system comprising a plurality of HID lamps it is very desirable to replace lamps before they fail, since a failed lamp can result in a dangerous environment in an area around the failed lamp.

It is known for a lighting service provider to replace HID lamps in a particular region of a lighting system on a preventative maintenance basis.

A problem with this approach is that lamps may be replaced well before the end of their useful lives. Typically, a lamp replaced on a preventative basis may be only 70% through its useful life. This approach therefore makes the lighting system expensive to operate.

Another approach taken by lighting service providers is to replace lamps when they are reported to have failed.

This approach involves a high cost per lamp due to the time taken for maintenance staff to reach the location of the failed lamp. Such replacement staff may have to visit a particular region several times a month to replace individual lamps as they fail.

Typically, an HID lamp is operated by an AC drive voltage applied across the lamp and an inductor in series. The electrical power input to the lamp, and hence the output power of the lamp, is controlled by a drive parameter of the AC drive voltage in such a way that the lamp intensity varies monotonically in response to monotonic variations in the drive parameter. Usually the electric power input to the lamp is controlled by controlling the magnitude or frequency of the AC drive voltage, although other drive parameters could be controlled. A given HID lamp will have a predetermined preset output power level at which it is designed to operate.

It is known that, as the age of an HID lamp increases, the terminal voltage measurable across the lamp increases. This results in the output power level of the lamp decreasing over time for a given drive parameter.

In addition to the normal progressive deterioration with burning hours mentioned, there are obviously other failure mechanisms possible, most notably mechanical damage to the outer envelope or burner tube or other failure of sealing within the lamp. These other failure mechanisms typically give rise to catastrophic failure of the lamp with no or minimal warning. The invention does not address these failure modes, but these tend to affect a minority of lamps, and typically only when the lamp has experienced extended burning hours and has a raised operating voltage.

Many designs of HID lamp include a control circuit that controls among other things the output power of the lamp. The controller may vary the drive parameter of the AC drive voltage in an attempt to achieve constant or near constant power within the lamp, despite any increase in the terminal voltage resulting from the aforesaid ageing of the lamp.

There is however a limit to the adjustment range of the drive parameter. As the lamp continues to age, the drive parameter eventually reaches this limit of the adjustment range. At this point, the control circuit is no longer able to maintain the output power of the lamp at the preset designed power level. This may result in the intensity of the light transmitted by the lamp reducing or rapidly varying.

As the lamp ages further, an active control circuit typically maintains the drive parameter at the upper limit of its adjustment range in an attempt to maintain the output power of the lamp as close as possible to the design output power level. However during such a time the lamp output power falls progressively shorter and shorter of the designed output power as the voltage across the lamp increases. Eventually the power in the lamp drops below the level needed to sustain illumination, and the lamp extinguishes.

It is known to use the control circuit to signal to a central location (ie. a switching control room) such failures of individual lamps. However for various reasons such an approach fails adequately to address the problem of unacceptable costs of maintenance programmes.

According to a first aspect of the present invention there is provided an apparatus for signalling impending end of life in a high intensity discharge (HID) lamp the operating voltage of which is measurable, the apparatus comprising a drive signal source for providing a drive signal, to the lamp, having a measurable drive parameter, and a controller for controlling operation of the lamp, the controller being capable of delaying activation of the drive signal source in response to a measured value of the operating voltage of the lamp.

By means of the invention, activation of the drive signal source may be delayed in dependence on the operating voltage of the lamp. As a result the lamp switches on a predetermined time after the controller becomes operational. When the apparatus of the invention forms part of eg, a public lighting system, therefore, the controllers of those lamps in the system that are reaching the ends of their lives will, on start-up of the system, illuminate some time after the healthy lamps in the system.

The lighting service provider may therefore at a lighting-up time readily observe a group of lamps (say all those in a particular street) and straightforwardly identify those which are nearing the ends of their lives. This requires little or no skill, while allowing maintenance staff to replace as many lamps as necessary, on an economical basis. The apparatus of the invention therefore exhibits numerous advantages over the prior art.

Preferably, the apparatus further comprises a first measuring device for measuring the magnitude of the output power of the lamp; and
a comparator for comparing the magnitude of the measured output power of the lamp with a predetermined output power magnitude,
the controller being capable of delaying activation of the drive signal source in response to the difference between the magnitude of the measured output power and the predetermined output power magnitude.

As explained hereinabove, for a given drive parameter, the output power of the lamp will decrease as the operating voltage of the lamp increases because the operating voltage increases as the lamp ages.

The controller thus operates to delay activation of the drive signal source in a somewhat indirect fashion, ie. in response to the operating voltage of the lamp. This is possible since the output power is proportional to the operating voltage

The controller may be arranged to delay activation of the drive signal source, if, for example, the magnitude of the measured output power is less than, or equal, to the predetermined output power.

Alternatively, or in addition, the apparatus includes a second measuring device for measuring the magnitude or some other characteristic of the drive parameter of the drive signal.

The controller may be arranged to delay actuation of the drive signal source when, for example, the magnitude of the drive parameter reaches a predetermined value, which may be eg. a designated "maximum" value.

According a second aspect of the present invention there is provided a method of signalling impending end of life in a high intensity discharge (HID) lamp having an operating voltage, the method comprising the steps of:
supplying the lamp with a drive signal having a measurable drive parameter; and delaying supply of the drive signal to the lamp in dependence on the operating voltage of the lamp.

Preferably the step of delaying supply of the drive signal to the lamp comprises the following steps:
(i) measuring the magnitude of the output power of the lamp;
(ii) comparing the measured magnitude of output power of the lamp with a predetermined output power magnitude;
(iii) producing a difference signal in response to the difference in the magnitude of the measured output power and the predetermined output power magnitude; and
(iv) delaying supply of the drive signal to the lamp in dependence on the difference signal.

Preferably, the step of delaying supply of the drive signal comprises delaying the supply of the drive signal when the magnitude of the measured output power of the lamp is less than, or equal to, the predetermined output power magnitude.

Alternatively, the step of delaying supply of the drive signal to the lamp in response to the operating voltage of the lamp comprises the steps of measuring the magnitude or another characteristic of the drive parameter of the drive signal, and delaying supply of the drive signal to the lamp in dependence on the magnitude or other characteristic of the drive parameter of the drive signal.

Preferably, the step of delaying supply of the drive signal in response to the magnitude of the drive parameter of the drive signal comprises the step of delaying supply of the drive signal to the lamp when the drive parameter exceeds a predetermined value.

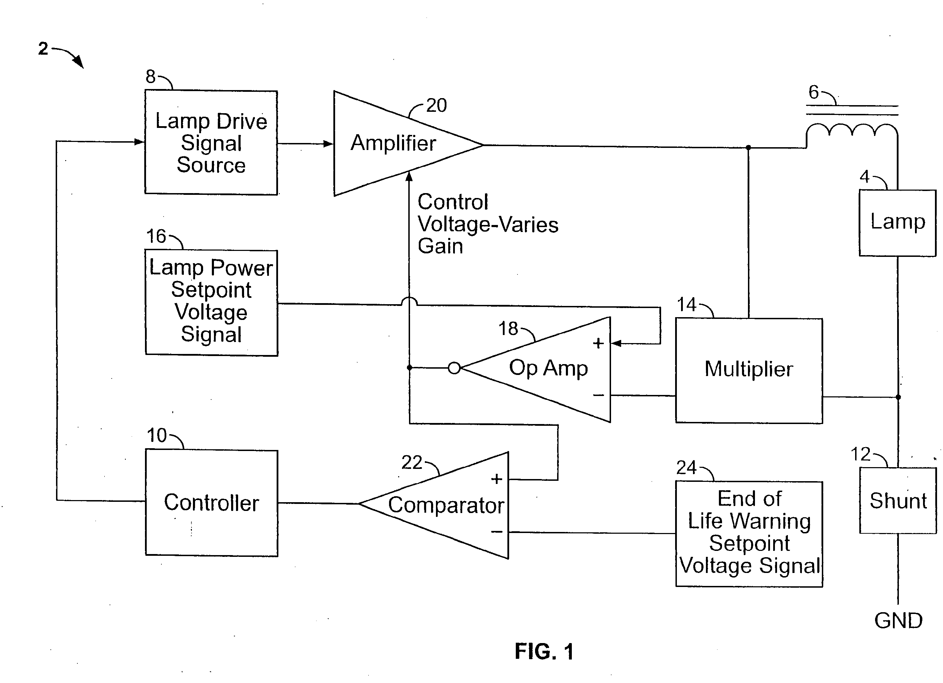

A preferred embodiment of the invention will now be described, by way of nonlimiting example only, with reference to accompanying Figure 1 which is a schematic representation of an apparatus according to the invention, for signalling the operational status of a high intensity discharge (HID) lamp.

Referring to the figure, an apparatus for signalling the operational status of an HID lamp is designated generally by the reference numeral 2.

In Figure 1 a lamp 4 is connected in series with an inductor 6. The lamp 4 is operated by the application of an AC voltage across the lamp 4 and inductor 6. The AC voltage is supplied to the lamp by a drive signal source 8. The electrical power input to the lamp 4, and hence the power output of the lamp 4, is controlled by controlling a drive parameter such as the magnitude or frequency of the AC voltage supplied by the lamp drive signal source 8. The lamp intensity varies monotonically in response to monotonic variations of the drive parameter.

As the lamp ages, its output voltage increases. This means that for a given value of the drive parameter, the output power of the lamp will decrease with age. The apparatus 2 further comprises a controller 10 in the form of a control circuit which varies the drive parameter which seeks to achieve constant or near constant output power in the lamp despite such increases in output voltage.

The apparatus 2 further comprises a shunt 12 for measuring the output current of the lamp and a multiplier 14 for calculating the lamp output power based on the output current measured by the shunt 12, and the AC drive voltage provided to the lamp 4 by the lamp drive signal source 8.

The drawing figure shows in schematic form a lamp power set point voltage signal 16 and an operational amplifier 18. The lamp power set point voltage signal 16 is fed to the additive input of the operational amplifier 18. The value of the signal 16 is based on the optimum output voltage for the lamp 4, and is used to determine the instantaneously prevailing output power level of the lamp 4.

The multiplier 14 feeds a signal to the subtracting input of the operational amplifier based on the measured output power of the lamp 4. If the measured output power is lower than the preset output power of the lamp, the operational amplifier 18 triggers an amplifier 20 to amplify the AC voltage supplied by the lamp drive signal source 8 to increase the drive parameter within the limits of a predetermined adjustment range.

The control circuit 10 thus enables the drive parameter to seek constant or near constant lamp output power, despite the increase in output voltage of the lamp.

At some point in the life of the lamp, the drive parameter will reach the end of its adjustment range, and the control circuit 10 will no longer be able to maintain the lamp power at a constant set point voltage determined by lamp power set point voltage 16.

The control circuit therefore includes a comparator 22 to the subtracting input of which is fed an end of life warning set point voltage signal 24 shown schematically in the figure. The magnitude of the end of life warning set point voltage is identical or similar to a lamp operating voltage that indicates impending lamp failure through ageing.

The multiplier 14 also feeds a signal into the comparator via the operational amplifier 18, which signal is based on the measured output power of the lamp 4.

The comparator compares the measured output power with a set point output power derived from the end of life warning set point voltage signal 24. If the measured output power of the lamp is less than or equal to the set point output power of the lamp the control circuit delays activation of the lamp drive signal source 8. This results in the lamp 4 switching on a predetermined time after activation of the system 2. This means that by simply visually inspecting a lamp it is possible to determine whether or not it is nearing the end of its useful life.

The control circuit further includes a memory whose function is to recall the comparator state at last use.

In a lighting system such as a public lighting system comprising a plurality of HID lamps, it is possible for replacement staff to quickly and easily identify which lamps require replacing before they actually fail.

In the embodiment described herein with reference to Figure 1, the drive parameter is increased as the operating voltage of the lamp decreases. In an alternative embodiment of the invention however, the drive parameter may be held constant, in which case the lamp light output will decrease with age as soon as the operating voltage of the lamp starts to increase. In such an embodiment, the controller may monitor the lamp output power level and may delay actuation of the lamp drive signal source 8 when the lamp output power has fallen to a predetermined level.

## Claims

1. An apparatus for signalling impending end of life in a high intensity discharge (HID) lamp the operating voltage of which is measurable, the apparatus comprising:
a drive signal source, for providing a drive signal to the lamp, having a measurable drive parameter; and
a controller for controlling operation of the lamp, the controller being capable of delaying activation of the drive signal source in response to a measured value of the operating voltage of the lamp.

2. An apparatus according to Claim 1 further comprising:
a first measuring device for measuring the magnitude of the output power in the lamp;
a comparator for comparing the magnitude of the measured output power of the lamp with a predetermined output power magnitude,
the controller being capable of delaying activation of the drive signal source in response to the difference between the magnitude of the measured output power and the predetermined output power magnitude.

3. An apparatus according to Claim 1 or Claim 2 comprising a second measuring device for measuring the magnitude or another characteristic of the drive parameter of the drive signal, the controller delaying activation of the drive signal source in dependence on the magnitude or other characteristic of the drive parameter of the drive signal.

4. An apparatus according to Claim 2 or Claim 3 when dependent from Claim 2, wherein the controller is arranged to delay actuation of the drive signal source if the measured output power is less than the predetermined output power.

5. An apparatus according to Claim 2 or Claim 3 when dependent from Claim 2, wherein the controller is arranged to delay actuation of the drive signal source if the magnitude or other characteristic of the drive parameter reaches a predetermined value.

6. A lighting system comprising a plurality of high intensity discharge (HID) lamps, each lamp comprising an apparatus for detecting a fault according to anyone of Claims 1 to 5.

7. A method of signalling impending end of life in a high intensity discharge (HID) lamp having an operating voltage, the method comprising the steps of:
supplying the lamp with a drive signal having a measurable drive parameter; and
delaying supply of the drive signal to the lamp in dependence on the operating voltage of the lamp.

8. A method according to Claim 7 wherein the step of delaying supply of the drive signal to the lamp comprises the steps of:
(i) measuring the magnitude of the output power of the lamp;
(ii) comparing the measured magnitude of output power of the lamp with a predetermined output power magnitude;
(iii) producing a difference signal in response to the difference in the magnitude of the measured output power and the predetermined output power magnitude; and
(iv) delaying supply of the drive signal to the lamp in dependence on the difference signal.

9. A method according to Claim 8 wherein the step of delaying supply of the drive signal to the lamp in response to the difference signal comprises delaying the supply of the drive signal to the lamp when the magnitude of the measured output power of the lamp is less than the predetermined output power magnitude.

10. A method according to Claim 7 wherein the step of delaying supply of the drive signal to the lamp comprises the steps of measuring the magnitude or another characteristic of the drive parameter of the drive signal, and delaying supply of the drive signal to the lamp in response to the magnitude of the drive parameter of the drive signal.

11. A method according to Claim 10 wherein the step of delaying supply of the drive signal to the lamp comprises the step of delaying supply from the drive signal to the lamp when the drive parameter exceeds a predetermined value.
